# EUROPEAN PATENT APPLICATION

(11) **EP 1 120 317 A2**
(43) Date of publication of application: **01.08.2001**
(21) Application number: 01300355.3
(22) Date of filing: 16.01.2001
(51) Int. Cl.: B60R 16/02

(54) **Electrical connection assembly**

(30) Priority: 28.01.2000 US 494221
(71) Applicant: Visteon Global Technologies, Inc., Dearborn, Michigan 48126-2490 (US)
(72) Inventor: Kolodziej, Michael, Brighton, MI 48114 (US)
(74) Representative: Gemmell, Peter Alan, Dr.

(57) **Abstract**

An electrical connection assembly 10 which selectively connects various assemblies and/or components 12, 14, 16 in a manner which substantially reduces the amount of circuit segments 38, 40, 42 which are required to provide the desired interconnection.

## Description

### (1) Field of the Invention

This invention relates to an electrical connection assembly and more particularly to an electrical connection assembly which selectively connects various devices and/or components which are operatively contained within an assembly, such as a vehicle, and which has a substantially reduced and/or minimized overall length and cost.

### (2) Background of the Invention

Assemblies, such as vehicles, include a number of devices and/or components which must be physically and communicatively interconnected in order to allow these contained devices and/or components to cooperatively perform one or more desired functions. Typically, within a vehicle, one or more wiring harnesses are employed to provide such required component/device interconnection.

A vehicle wiring harness typically includes several electrical conductors or wires which are bundled or operatively contained within a dielectric material or outer sheath. The harness traverses the vehicle and each of the contained wires or conductors is typically, selectively, and physically coupled to one or more of the contained components and/or devices. Several employed harnesses may also be selectively interconnected, thereby selectively allowing for the interconnection of a relatively large amount of devices and/or components.

While these wiring harnesses do provide such desired component and/or device interconnection, they suffer from several drawbacks. For example, the wiring harnesses are typically and relatively bulky, thereby requiring a relatively large amount of mounting space. Since available vehicle mounting space is limited, the number of available routing paths of the harnesses are relatively small, thereby, in many instances, substantially preventing the use of a path of minimal length between components and thereby substantially preventing the overall length of the harnesses to be substantially reduced and/or minimized and therefore increasing the overall cost of vehicle manufacture. Moreover, these vehicle wiring harnesses are relatively heavy and create unwanted vibration and noise within the passenger compartment unless "wrapped" or contained within tape and/or foam, thereby adding to the overall cost of vehicle assembly and increasing the difficulty and complexity of servicing the harness.

Moreover, these vehicle harnesses are typically not waterproof and are susceptible to moisture damage (e.g., the contained electrical conductors may become electrically shorted). These harnesses also require a relatively large amount of relatively complicated splices in order to selectively interconnect these devices and/or components, thereby increasing the overall cost of vehicle assembly and increasing the likelihood of failure and/or malfunction.

While various attempts have been made to replace these traditional vehicle wiring harnesses, such attempts have increased the overall cost of interconnecting the contained components and/or devices and have not been widely utilized.

There is therefore a need to provide a connection assembly which allows for the selective interconnection of assemblies and/or devices, such as vehicle assemblies and/or devices, in a cost-effective manner and which overcomes at least some of the previously delineated drawbacks associated with traditional wiring harnesses.

### SUMMARY OF THE INVENTION

It is a first object of the invention to provide an electrical connection assembly which overcomes some or all of the previously delineated drawbacks of prior wiring harness assemblies.

It is a second object of the invention to provide an electrical connection assembly which overcomes some or all of the previously delineated drawbacks of wiring harnesses and which allows several contained components and/or assemblies to be selectively interconnected in a substantially cost-effective manner.

According to a first aspect of the present invention, an electrical connection assembly for use within a vehicle of the type having a first component, a second component, and a third component is provided. The electrical connection assembly includes a first circuit segment which is coupled to the first component; a second circuit segment which is coupled to the second component and which cooperates with the first circuit segment to define a first path of minimal separation; a third circuit segment which is coupled to the third component and which cooperates with the second circuit segment to define a second path of minimal separation; a fourth circuit segment which traverses the first path of minimal separation and which is coupled to the first circuit segment and to the second circuit segment; and a fifth circuit segment which traverses the second path of minimal separation and which is coupled to the second circuit segment and to the third circuit segment.

According to a second aspect of the present invention, a method is provided for use within a vehicle of the type having a first, second, and a third component. The method comprises the steps creating a first value which is substantially equal to a distance between the first and the second component; creating a second value which is substantially equal to a second distance between the first and the third component; creating a third value which is substantially equal to a third distance between the second and third component; creating a fourth value by adding the first and third values; creating a fifth value by adding the second value and the third value; providing a circuit segment; and causing the circuit segment to traverse between and connect the first and third component only if the fifth value is lower than the fourth value.

These and other aspects, features, and advantages of the present invention will become apparent by reading the following detailed description of the preferred embodiment of the invention and by reference to the following drawings.

### BRIEF DESCRIPTION OF THE DRAWINGS

Figure 1 is an electrical schematic diagram of an electrical connection assembly which is made in accordance with the teachings of the preferred embodiment of the invention; and
Figure 2 is a flow-chart illustrating the sequence of operational steps which provide a connector routing scheme which is used to produce the connection assembly which is shown in Figure 1.

### DETAILED DESCRIPTION OF THE PREFERRED EMBODIMENT OF THE INVENTION

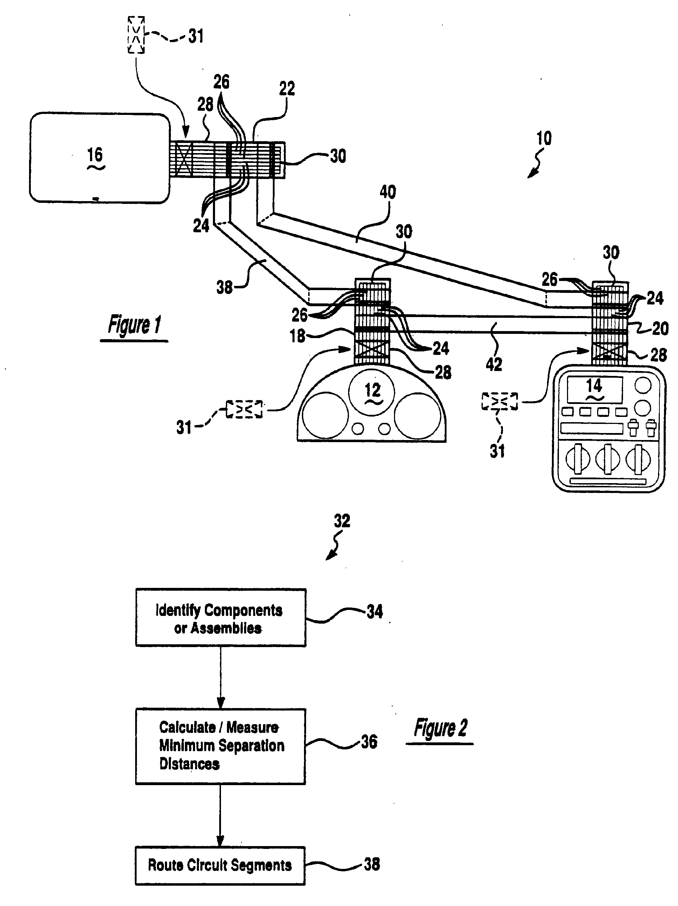

Referring now to Figure 1, there is shown an electrical connection assembly 10 which is made in accordance with the teachings of the preferred embodiment of the invention. Particularly, electrical connection assembly ("the assembly") 10 is adapted, as shown in Figure 1, to selectively connect a typical and conventional vehicle instrument "cluster" assembly 12, a typical and conventional vehicle audio control and climate control assembly or "center stack" 14, and a typical and conventional vehicle junction block 16. It should be realized that while connection assembly 10 is shown in an operative and connective relationship with various vehicle components and assemblies, other types of non-vehicular apparatuses, components, and assemblies may employ connection assembly 10. Further, connection assembly 10 may be used to selectively and optimally connect or couple a desired and varied amount or number of assemblies, devices, and/or components and is not limited to use with the three assemblies, components, and/or elements, which are shown in Figure 1. Hence, it should be realized that the number and type of assemblies, elements, and/or components 12, 14, and 16, which are shown in Figure 1, should not limit the generality of the invention. Rather the architecture of Figure 1 should be properly considered as an illuminating example of only one of the various uses and/or configurations of the connection assembly 10.

Each assembly and/or component 12, 14, 16 is respectively, physically, and electrically coupled to substantially identical circuit segments 18, 20, 22 which, in one non-limiting embodiment of the invention, include several conductors 24 which are adapted to operatively and communicatively receive relatively high current signals and several conductors 26 which are adapted to operatively and communicatively receive relatively low current signals. In one non-limiting embodiment of the invention, each circuit segment 18, 20, 22 includes a substantially identical generally flat and thin dielectric substrate 28 upon which the respective conductors 24, 26 are operatively supported and reside. Each circuit segment 18, 20, 22 further includes a substantially transparent membrane or protective cover or membrane 30 which overlays and cooperates with substrate 28 to protectably encapsulate the respective conductors 24, 26 and to substantially protect respective conductors 24, 26 against water type damage. In one non-limiting embodiment, each substrate 28 is formed from a material which is commonly known as "PET" or "PEN" and which is available from the Sheldahl Corporation. Further, in one non-limiting embodiment of the invention, each protective membrane or cover 30 is formed from a commercially available copper-polymer laminate material which is also available from the Sheldahl Corporation.

These circuit segments 18, 20, 22 respectively allow each of the components and/or assemblies 12, 14, 16 to be physically and electrically coupled in a substantially optimal manner, as will be discussed below. Hence, in the preferred embodiment of the invention, each component or assembly 12, 14, 16 is respectively attached to a substantially identical and generally rectangular circuit segment 18, 20, and 22.

As shown best by flowchart 32 of Figure 2, the architecture or the manner in which components or assemblies 12, 14, 16 are connected is dynamically, substantially, and optimally configured based upon their respective and proximate location or position with respect to each other. That is, the first step 34 requires an identification of the components or assemblies and their associated location within assembly 10, such as components or assemblies 12, 14, and 16, which are to be connected. Step 36 follows step 34 and in this step, a path of minimal separation or shortest distance is calculated or measured between each pair of assemblies (i.e. between each pair of respective circuit segments 18, 20, 22) which were identified in step 34. In this step 36, the respective minimal or optimal paths are also identified and stored for later use.

Step 38 follows step 36 and in this step, circuit segments 38, 40, 42 are employed to respectively, physically, and electrically connect assembly/component pairs 12, 16; 14, 16; and 12, 14 (i.e., to connect respective circuit segments 18, 20, 22) along respective minimal separation paths. In one non-limiting embodiment, each circuit segment 38, 40, and 42 is substantially identical to each circuit segment 18, 20, and 22. Particularly, the use of generally flat and relatively thin circuit segments 18, 20, 22, 38, 40, and 42 allows the segments 18, 20, 22, 38, 40, and 42 to be routed even through very tight spaces and reduces undesirable vibration. Moreover, by connecting circuit segments 18, 20, 22 to assemblies and/or elements 12, 14, 16, the required interconnection to these assemblies and/or elements 12, 14, 16 is simplified while obviating the need for the interconnecting circuit segments, such as circuit segments 38, 40, 42, to actually gain access to these assemblies 12, 14, 16 which may be substantially inaccessible. The further use of dual-capacity conductors 24, 26 allows for the use of only a single connecting circuit segment, such as segments 38, 40, 42, between devices and/or assemblies 12, 14, 16 (i.e., a single segment may provide each type of current), thereby allowing for substantially minimal routing and the efficient use of circuit segment material which optimizes the electrical connection architecture and reduces and/or optimizes overall cost. It should be appreciated that respective conductors 24, 26 of circuit segments 18, 20, 22 may be physically and electrically coupled to assemblies/components 12, 14, 16 by laser welding or soldering and that circuit segments 38, 40, and 42 (i.e., conductors 24, 26 which are operatively contained upon and/or within these respective segments 38, 40, 42) may be physically and electrically coupled to respective conductors 24, 26 or circuit segments 18, 20, 22 by use of laser welding or soldering. Further, in another non-limiting embodiment of the invention, a portion 31 of the protective membrane 30 may be removed from each respective substrate 28 and removably reattached to the respective substrate 28. In this manner, conductors 24, 26, on each respective circuit segment 18, 20, 22, 38, 40, and 42 are selectively accessible for testing.

In another non-limiting embodiment, the number of circuit segments, such as circuit segments 38, 40, and 42, are reduced by selectively allowing, by way of example and without limitation, some of the conductors 24, 26 which connect two assemblies or components (e.g., assemblies or components 12, 16) to be physically and electrically coupled (e.g., by laser welding or soldering) to conductors 24, 26 which connect one of these two assemblies or components to a third assembly or component (e.g., 14). In the non-limiting example which is shown in Figure 1, circuit segment 40 may be selectively eliminated by allowing some of the conductors 24, 26 which are contained upon circuit segment 42 to be selectively coupled to conductors 24, 26 on circuit segment 38, through and/or by use of the conductors 24, 26 on circuit segment 18.

In another alternate architectural arrangement, each minimal or shortest path which connects the three or other number of required assemblies or components 12, 14, 16 is measured or calculated and the shortest overall path is employed. For example, a first path is calculated or measured and is equal to the cumulative or shortest distance between circuit segments 22 and 18 and between circuit segments 18 and 20. A second path is calculated or measured and is equal to the cumulative and shortest distance between circuit segments 22 and 20 and between circuit segments 20 and 18. Hence, circuit segment 40 is employed only if the second path is shorter than the first path. Moreover, in yet another alternate embodiment, two (or more) components or assemblies, such as 12, 14, may be required to be connected. In this embodiment, the minimal and/or optimal distance of the path from component and/or element 14 to component and/or element 16 (i.e., from circuit segment 20 to circuit segment 22) is compared with the distance of the path between component and/or element 12 and component and/or element 16 (i.e., from circuit segment 18 to circuit segment 22). If the first path is used (i.e., is shorter than the second path), element 14 is connected to element 16 by a circuit segment 40 and element 12 is coupled to a portion of this circuit segment 40 by circuit segment 20. If the second path is used, element 12 is connected to element 16 by a single circuit segment 38.

It is to be understood that the invention is not limited to the exact construction and method which has been delineated above, but that various changes and modifications may be made without departing from the spirit and the scope of the invention.

## Claims

1. An electrical connection assembly for use within a vehicle of the type having a first component, a second component, and a third component comprising:
a first circuit segment which is coupled to said first component;
a second circuit segment which is coupled to said first component and which cooperates with said second circuit segment to define a first path of minimal separation;
a third circuit segment which is coupled to said second component and which cooperates with said first circuit segment to define a second path of minimal separation;
a fourth circuit segment which traverses said first path of minimal separation and which is coupled to said first circuit segment and to said second circuit segment; and
a fifth circuit segment which traverses said second path of minimal separation and which is coupled to said second circuit segment and to said third circuit segment.

2. The electrical connection assembly of claim 1 wherein said first component comprises a junction block.

3. The electrical connection assembly of claim 2 wherein said second component comprises an instrument cluster.

4. The electrical connection assembly of claim 3 wherein said third component comprises an audio control assembly.

5. The electrical connection assembly of claim 1 wherein each of said first, second, and third segments are substantially identical.

6. The electrical connection assembly of claim 1 wherein said first, second, and third segments each comprise:
a flat substrate;
at least one low current conductor; and
at least one high current conductor.

7. The electrical connection assembly of claim 6 wherein each of said first, second, and third segments include a substantially transparent protective cover.

8. The electrical connection assembly of claim 7 wherein each of said protective covers include a removable service portion.
